# EUROPÄISCHE PATENTSCHRIFT

(11) **EP 3 724 614 B1**
(45) Veröffentlichungstag und Bekanntmachung des Hinweises auf die Patenterteilung: **26.04.2023**
(21) Anmeldenummer: 18803654.5
(22) Anmeldetag: 14.11.2018
(51) Int. Cl.: G01F 23/28, G01F 23/80, G01F 25/20, G01S 15/88, G05B 19/042, G06T 7/62, G01B 11/02, G01F 17/00

(54) **VERFAHREN ZUR VEREINFACHTEN INBETRIEBNAHME EINES FELDGERÄTS**
METHOD OF SIMPLIFIED INITIATION OF A FIELD DEVICE
PROCÉDÉ DE MISE EN SERVICE SIMPLIFIÉE D'UN DISPOSITIF DE TERRAIN

(30) Priorität: 15.12.2017 DE 102017130138
(43) Veröffentlichungstag der Anmeldung: 21.10.2020
(73) Patentinhaber: Endress+Hauser SE+Co. KG, 79689 Maulburg (DE)
(72) Erfinder: PALATINI, Florian, 79692 Kleines Wiesental (DE); BIRGEL, Eric, 79650 Schopfheim (DE); HAAG, Tanja, 79650 Schopfheim (DE)
(74) Vertreter: Koslowski, Christine Adelheid
(86) Internationale Anmeldenummer: PCT/EP2018/081150
(87) Internationale Veröffentlichungsnummer: WO 2019/115117

(56) Entgegenhaltungen:
- US-A1- 2011 249 000
- US-A1- 2012 221 261
- US-A1- 2017 284 854

## Beschreibung

Die Erfindung betrifft ein Verfahren zur Inbetriebnahme eines an einer Komponente, insbesondere an einem Behälter, einer Messstelle angebrachten Feldgeräts der Automatisierungstechnik mittels einer Bedieneinheit, wobei die Bedieneinheit eine Anzeigeeinheit und eine Kamera aufweist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Zur Füllstandsmessung von Füllgütern in Behältern haben sich berührungslose Messverfahren etabliert, da sie robust und wartungsarm sind. Dabei werden unter dem Begriff "Behälter" im Rahmen der Erfindung auch nicht-abgeschlossene Behältnisse, wie beispielsweise Becken, Seen oder fließende Gewässer verstanden. Ein weiterer Vorteil berührungsloser Messverfahren besteht in der Fähigkeit, den Füllstand quasi kontinuierlich messen zu können. Im Bereich der kontinuierlichen Füllstandsmessung werden daher vorwiegend Ultraschall- oder Radar-basierte Messverfahren eingesetzt (im Kontext dieser Patentanmeldung beziehen sich der Begriff Ultraschall auf SchallWellen in einem Frequenzbereich zwischen 14 KHz und 1 GHz; Der Begriff "Radar" auf Signale bzw. elektromagnetische Wellen mit Frequenzen zwischen 0.03 GHz und 300 GHz).

Im Fall von Radar-basierter Füllstandsmessung bildet das Pulslaufzeit-Messprinzip ein etabliertes Messprinzip. Hierbei werden Ultraschall- oder Mikrowellenpulse als Messsignale zyklisch in Richtung des Füllgutes ausgesandt und die Laufzeit bis zum Empfang des entsprechenden Echo-Pulses gemessen. Auf Basis dieses Messprinzips können Füllstandsmessgeräte mit vergleichsweise geringem schaltungstechnischem Aufwand realisiert werden. Ein Radar-basiertes Füllstandsmessgerät, welches nach dem Puls-Laufzeit-Verfahren arbeitet, ist beispielsweise in der Offenlegungsschrift DE 10 2012 104 858 A1 beschrieben. Das Ultraschall-basierte Pendant ist unter anderem in der Patentschrift EP 1480021 B1 gezeigt.

Sofern eine komplexere Schaltungstechnik in Kauf genommen werden kann, bietet sich zur Radarbasierten Füllstandsmessung auch FMCW *("Frequency Modulated Continuous Wave"*) als Messprinzip an. Bezüglich eines typischen Aufbaus von FMCW-basierten Füllstandsmessgeräten sei exemplarisch auf die Offenlegungsschrift DE 10 2013 108 490 A1 verwiesen.

Das Messprinzip von FMCW- Radar basierten Entfernungsmessverfahren beruht darauf, ein Radar-basiertes Messsignal kontinuierlich mit modulierter Frequenz auszusenden. Dabei liegt die Frequenz des Messsignals in einem festgelegten Frequenzband im Bereich einer standarisierten Mittenfrequenz. Kennzeichnend für FMCW ist hierbei, dass die Sende-Frequenz nicht konstant ist, sondern sich periodisch innerhalb eines definierten Frequenzbandes ändert. Die zeitliche Änderung ist hierbei standardmäßig linear und weist eine Sägezahn- beziehungsweise Dreiecks-Form auf. Eine Sinus-förmige Änderung kann prinzipiell jedoch auch verwendet werden. Im Gegensatz zum Pulslaufzeit-verfahren wird die Entfernung bzw. der Füllstand bei Implementierung des FMCW-Verfahrens auf Basis der instantanen Frequenzdifferenz zwischen dem aktuell empfangenen, reflektierten Messsignal und dem momentan ausgesendeten Messsignal bestimmt.

Bei jedem der oben genannten Messprinzipien (Ultraschall, Pulsradar, und FMCW) wird zur Ermittlung des Füllstandes anhand des empfangenen, reflektierten Messsignals eine entsprechende Messkurve aufgenommen. Bei Verwendung von Ultraschall entspricht die Messkurve grundsätzlich direkt dem zeitlichen Amplitudenverlauf des reflektierten Messsignals. Im Falle des Pulsradarbasierten Verfahrens wird die Messkurve aufgrund der hohen Pulsfrequenz hingegen durch Unterabtastung des reflektierten Messsignals erstellt. Dadurch bildet die Messkurve das eigentliche, reflektierte Messsignal zeitgedehnt ab. Bei Implementierung des FMCW-Verfahrens wird die Messkurve durch Mischen des momentan gesendeten Messsignals mit dem reflektierten Messsignal erstellt. In allen Fällen spiegelt die Messkurve jedoch die Amplitude des reflektierten Messsignals in Abhängigkeit der Messdistanz wieder.

Eine Vielzahl solcher Feldgeräte wird von der Endress+Hauser-Gruppe produziert und vertrieben.

Feldgeräte, die in eine neue Applikation einer Prozessanlage integriert werden, oder Austauschfeldgeräte, die ein veraltetes oder defektes Feldgerät einer Applikation ersetzen, müssen im Zuge der Inbetriebnahme spezifisch auf die jeweilige Applikation des Feldgeräts in der Messstelle angepasst werden. Dafür werden diese Feldgeräte während oder nach der Fertigung konfiguriert und parametriert. Die Konfiguration beschreibt zum einen die hardwareseitige Konfiguration, beispielsweise das Flanschmaterial eines Durchflussmessgerätes, als auch die softwareseitige Konfiguration. Unter Parametrierung versteht man das Definieren und Festlegen von Parametern, mit deren Hilfe der Betrieb des Feldgerätes auf die jeweiligen Merkmale der Applikation, beispielsweise das Messmedium, eingestellt wird.

Abhängig vom Feldgerätetyp kann ein Feldgerät mehrere hunderte verschiedene Parameter aufweisen, denen im Zuge der Inbetriebnahme Parameterwerte zugewiesen werden, zum Beispiel die Eingabe einer Linearisierungstabelle, welche eine stückweise Approximation zwischen der gemessenen physikalischen Messgröße und dem vom Feldgerät ausgegebenen Messwert darstellt. Heutzutage wird die Parametrierung eines Feldgeräts mittels Softwaretools vorgenommen. Die Eingaben der Parameterwerte sind ausschließlich textbasiert möglich und setzen ein technisches Verständnis seitens des Bedieners voraus.

Im Falle eines Füllstandmessgeräts ist zu dessen Inbetriebnahme die Verwendung eines sogenannten Hüllkurvenmoduls obligatorisch. Hierbei wird ein Diagramm verwendet, welches eine oben genannte Messkurve anzeigt. Mittels der Messkurve werden neben dem eigentlichen Reflexionssignal am Füllgut allerdings auch Störreflektionen dargestellt. Häufig wird ein Füllstandmessgerät derart an einem Behälter befestigt, dass das Füllstandmessgerät einen gewissen Abstand zu Behälterwand aufweist. Das Messsignal durchläuft daher erst eine gewisse Distanz, bis es sich freistrahlend im Behälter bewegt. Diese Distanz, welche als Blockdistanz bezeichnet wird, muss für die Auswertung der Messkurve berücksichtigt werden. Auch hierfür ist technisches Verständnis seitens des Bedieners erforderlich.

Aus der Patentanmeldung US 2017/0284854 A1 ist ein Verfahren zur Ausrichtung eines Füllstandsmessgeräts an einem Container bekannt geworden.

Die Patentanmeldung US 2011/0249000 A1 beschreibt ein Kontrollmodul für ein Feldgerät, welches ein Bildverarbeitungsmodul aufweist.

Die Patentanmeldung US 2012/0221261 A1 offenbart ein Füllstandsmessgerät, welches anhand einer Echokurve Information über die Topografie eines Füllguts bestimmt.

Aus der Patentanmeldung DE 10 2016 207 058 A1 ist eine mobile Diagnosevorrichtung für ein Füllstandsmessgerät bekannt, das eine Kamera zum Erfassen von Bilddaten der Umgebung des Füllstandsmessgeräts aufweist.

Aus der Patentanmeldung DE 10 2016 107 045 A1 ist ein Verfahren zum sicheren Konfigurieren eines Feldgeräts der Prozessautomatisierung bekannt.

Aus der Schrift WO 2016/005121 A2 ist ein Verfahren zum Überwachen, Kontrollieren und Warten von Feldgeräten in explosionsgefährdeten Bereichen von Automatisierungsanlagen bekannt. Scannen eines optischen Barcodes mittels einer Kamera, die an einem Helm montiert ist, erlaubt die Identifizierung eines Feldgeräts. Ein am Helm montiertes Head-Up-Display dient dazu, einem Bediener wartungsspezifische Informationen anzuzeigen.

Ausgehend von dieser Problematik liegt der Erfindung die Aufgabe zugrunde, ein Verfahren vorzustellen, welches auch technisch unerfahrenen Bedienern eine zuverlässige Inbetriebnahme von Feldgeräten erlaubt.

Die Aufgabe wird durch ein Verfahren zur Inbetriebnahme eines an einer Komponente, insbesondere an einem Behälter, einer Messstelle angebrachten Feldgeräts der

Automatisierungstechnik mittels einer Bedieneinheit gelöst, wobei die Bedieneinheit eine Anzeigeeinheit und eine Kamera aufweist, wobei als Bedieneinheit eine Datenbrille verwendet wird, umfassend:
- Identifizieren des Feldgeräts mittels der Bedieneinheit;
- Ermitteln von einzustellenden Parametern des Feldgeräts anhand des Identifizierens des Feldgeräts;
- Erfassen von Geometriedaten von zumindest einem Teil der Komponente mittels der Kamera;
- Analysieren der erfassten Geometrie und Ableiten von zumindest einem Parameterwert für zumindest einen der einzustellenden Parameter mittels der Analyse der erfassten Geometrie;
- Bestätigen des berechneten Parameterwertes; und
- Übermitteln des bestätigten Parameterwertes an das Feldgerät und Speichern des Parameterwertes in dem Feldgerät.

Mittels des erfindungsgemäßen Verfahrens wird der Bediener auf einfache Art und Weise bei der Inbetriebnahme eines Feldgeräts unterstützt, indem mittels der Bedieneinheit automatisch Parameterwerte für bestimmte Parameter ermittelt werden. Nach der Identifikation des Feldgeräts werden automatisch die einzustellenden Parameter des Feldgeräts abgerufen. Hierfür ist auf der Bedieneinheit eine Datenbank vorgesehen, welche die einzustellenden Parameter einer Vielzahl von Feldgerätetypen beinhaltet. Alternativ ist die Bedieneinheit mit einer externen Datenbank in Verbindung, insbesondere einer cloudfähigen Datenbank mittels einer Internetverbindung, welche die einzustellenden Parameter einer Vielzahl von Feldgeräten vorhält.

Die Identifikation des Feldgeräts kann auf verschiedene Arten erfolgen. Im einfachsten Fall wählt der Bediener den Feldgerätetyp des Feldgeräts aus einer Liste aus, welche ihm auf der Anzeigeeinheit der Bedieneinheit angezeigt wird. Anschließend werden die einzustellenden Parameter von der Datenbank abgerufen. Alternativ werden Identifikationsdaten aus dem Feldgerät ausgelesen, insbesondere mittels einer Funkverbindung, insbesondere Bluetooth oder Wi-Fi, zwischen Feldgerät und Bedieneinheit. Eine weitere Möglichkeit stellt das optische Identifizieren des Feldgeräts dar. Hierfür wird das Feldgerät mittels der Kamera erfasst und auf definierte Geometrien untersucht, welche mit einer Datenbank abgeglichen werden. Ein optisches Identifizieren des Feldgeräts umfasst auch das Auslesen eines optischen Codes, beispielsweise eines Barcodes oder eines QR-Codes, welcher an dem Feldgerät angebracht ist.

Anschließend erfasst die Kamera der Bedieneinheit Geometriedaten von der Komponente. Beispielsweise werden die Abmessungen der Komponente erfasst, im Falle eines Behälters beispielsweise dessen Breite, Höhe und Tiefe, und/oder im Falle, dass ein Durchflussmessgerät an einer Rohrleitung angebracht ist, die Rohrweite und/oder die Einlauf- und Auslauflänge zu/von dem Durchflussmessgerät. Die Bedieneinheit analysiert die erfassten Geometriedaten und vergleicht diese mit bekannten Geometriedaten. Diese bekannten Geometriedaten können ebenfalls auf der Datenbank enthalten sein. Im Zuge des Vergleichs werden diejenigen Parameter bestimmt, für welche anhand der erfassten Geometriedaten Parameterwerte berechnet werden können. Das Berechnen der Parameterwerte erfolgt anhand eines oder mehrerer auf der Bedieneinheit implementierter Algorithmen. Bereits bekannte Parameterwerte, welche verknüpft mit den bekannten Geometriedaten auf der Datenbank enthalten sind, können Startwerte/Rahmenbedingungen für die Berechnung darstellen. Die berechneten Parameterwerte werden dem Bediener anschließend vorgeschlagen.

Der Bediener prüft anschließend die vorgeschlagenen Parameterwerte und bestätigt einen oder mehrere der vorgeschlagenen Parameterwerte. Gegebenenfalls erhält der Bediener die Möglichkeit, den vorgeschlagenen Parameterwert noch zu ändern. Die bestätigten Parameterwerte werden nun von der Bedieneinheit derart an das Feldgerät übermittelt, dass das Feldgerät mit den eingegebenen Parameterwerten parametriert wird.

Feldgeräte, welche im Zusammenhang mit dem erfindungsgemäßen Verfahren erwähnt werden, sind bereits im einleitenden Teil der Beschreibung beispielhaft erwähnt worden. Das erfindungsgemäße Verfahren eignet sich für alle Arten und Feldgerätetypen und ist nicht etwa auf Füllstandmessgeräte beschränkt.

Gemäß einer vorteilhaften Ausgestaltung des erfindungsgemäßen Verfahrens ist vorgesehen, dass eine Referenzgeometrie mittels der Kamera erfasst wird, wobei die Referenzgeometrie in zumindest einer Dimension eine definierte Länge aufweist, wobei anhand der Referenzgeometrie ein dreidimensionales Polygonnetz erstellt wird. Aus der Literatur ist das SLAM-Problem ("Simultaneous Localization and Mapping") bekannt, welches ein Problem der Robotik bezeichnet, bei dem ein mobiler Roboter gleichzeitig eine Karte seiner Umgebung erstellen und seine Position innerhalb dieser Karte schätzen muss. Eine Lösung für dieses Problem stellt das Berechnen eines dreidimensionalen Polygonnetzes mithilfe einer Referenzgeometrie dar.

Die Kamera wird hierfür entweder um die Referenzgeometrie bewegt oder der Blickwinkel von der Kamera auf die Referenzgeometrie wird mittels kleiner Bewegungen minimal variiert. Mittels einer Stereokamera kann auf diesen ersten Schritt verzichtet werden. Alternativ kann eine Tiefenkamera verwendet werden, welche diesen Schritt selbstständig übernimmt. Anschließend wird ein dreidimensionales Abbild der Geometrie in Form eines Polygonnetzes erstellt. Die definierte Länge von zumindest einer der Dimensionen der Referenzgeometrie wird der Bedieneinheit mitgeteilt, wodurch die Bedieneinheit einen definierten Abstand zwischen den Maschen des Polygonnetzes berechnet. Durch Erweitern, bzw. Aufspannen des Polygonnetzes kann die Raumgröße und die Lage der Bedieneinheit im dreidimensionalen Raum bestimmt werden.

In einer bevorzugten Weiterbildung des erfindungsgemäßen Verfahrens ist vorgesehen, dass das dreidimensionale Polygonnetz verwendet wird, um die von der Kamera erfassten Geometriedaten zu vermessen. Da der Bedieneinheit die Maschenweite des dreidimensionalen Polygonnetzes bekannt ist, können beliebige Geometrien erfasst und Vermessen werden. Dieses Verfahren weist eine sehr hohe Genauigkeit auf. Im Zusammenhang mit dem erfindungsgemäßen Verfahren werden insbesondere die Dimensionen der Komponente der Messstelle, oder Komponenten, welche ebenfalls an der Messstelle befestigt sind, ausgemessen.

Gemäß einer vorteilhaften Ausgestaltung des erfindungsgemäßen Verfahrens ist vorgesehen, dass für die Analyse der erfassten Geometrie weitere Geometriedaten, welche die erfassten Geometriedaten erweitern und insbesondere Teile der Komponente betreffen, welche nicht von der Kamera erfassbar sind, hinzugezogen werden. Diese weiteren Geometriedaten sind beispielsweise im Zuge der Planung der Anlage, bzw. der Messstelle der Anlage, erfasst, bzw. erstellt worden. Hierbei handelt es sich beispielsweise um Teile der Komponente, welche sich im Inneren der Komponente befinden und von einer optischen Kamera, welche nicht durch die Wand der Komponente hindurchdringen kann, nicht erfassbar sind. Im Falle eines Behälters handelt es sich beispielsweise um Rohrleitung, um Anschlüsse für Rohrleitungen, um Rührwerke, etc., welche sich im Inneren des Behälters befinden. Es kann sich allerdings auch um Teile des Feldgeräts handeln.

Gemäß einer bevorzugten Ausgestaltung des erfindungsgemäßen Verfahrens ist vorgesehen, dass die weiteren Geometriedaten auf dem Feldgerät gespeichert sind und aus dem Feldgerät ausgelesen werden.

Gemäß einer alternativen bevorzugten Ausgestaltung des erfindungsgemäßen Verfahrens ist vorgesehen, dass die weiteren Geometriedaten auf einer Datenbank, insbesondere auf einer cloudfähigen Datenbank, gespeichert sind und aus der Datenbank ausgelesen werden. Es kann sich hierbei um dieselbe Datenbank handeln, welche zum Identifizieren des Feldgeräts, zum Ermitteln der einzustellenden Parameter und/oder zum Vergleichen der erfassten Geometriedaten mit bekannten Geometriedaten verwendet wird. Alternativ handelt es sich um eine verschiedene, eigenständige Datenbank.

In einer vorteilhaften Ausgestaltung des erfindungsgemäßen Verfahrens ist vorgesehen, dass im Rahmen der Analyse der erfassten Geometriedaten, bzw. der weiteren Geometriedaten, ein dreidimensionales Visualisierungsmodell von zumindest einem Teil der Komponente erstellt wird. Dieses Visualisierungsmodell stellt die Komponente, bzw. den Teil der Komponente, in einer 3D-Darstellung dar.

Eine vorteilhafte Ausgestaltung des erfindungsgemäßen Verfahrens sieht vor, dass auf der Anzeigeeinheit das Sichtfeld des Bedieners dargestellt wird, und dass das Visualisierungsmodell die Komponente auf dem von der Anzeigeeinheit dargestellten Sichtfeld zumindest teilweise überlagert. Bei Einbeziehen von weiteren Geometriedaten sind für den Bediener mehr Details der Komponente ersichtlich, insbesondere bezüglich des Innenlebens der Komponente, als für ihn mit bloßem Auge erfassbar wäre.

Die Anzeigeeinheit der Bedieneinheit zeigt das aktuelle Sichtfeld des Bedieners. Im einfachsten Fall handelt es sich bei der Anzeigeeinheit um ein kombiniertes transparentes Glas mit einem Projektor. Der Bediener blickt durch das Glas hindurch. Die durch das Glas betrachtete Umgebung wird als Sichtfeld bezeichnet. Der Projektor ist dazu ausgestaltet, eine Projektion auf das Glas zu werfen, welche der Bediener wahrnimmt. Über das aktuelle Sichtfeld des Bedieners wird so das Visualisierungsmodell gelegt. Das Visualisierungsmodell wird nun in der Art über das Sichtfeld des Bedieners gelegt, dass dieses das Bild an derjenigen Stelle überlagert, an welche sich die Komponente, bzw. der Teil der Komponente, befindet. Ändert sich die Position der Kamera bezüglich der Komponente der Messstelle, so verändert sich das auf der Anzeigeeinheit visualisierte Bild dementsprechend. Das Visualisierungsmodell verbleibt allerdings auf der zugewiesenen Position der Komponente und "wandern", bzw. dreht sich dementsprechend abhängig von der Verschiebung der Komponente auf dem Bild mit. Es kann darüber hinaus vorgesehen sein, Beschriftungen zu den Geometriedaten hinzuzufügen, welche im Visualisierungsmodell angezeigt werden. Diese zeigen beispielsweise die Namen von erkannte Strukturen und/oder die Längeneinheiten der erfassten Geometrien an.

Gemäß einer vorteilhaften Ausgestaltung des erfindungsgemäßen Verfahrens ist vorgesehen, dass die Anzeigeeinheit als Sichtfeld des Bedieners ein von der Kamera erfasstes, ständig aktualisiertes Bild visualisiert, und wobei das Visualisierungsmodell die Komponente des auf der Anzeigeeinheit angezeigten Bilds zumindest teilweise überlagert. Die Anzeigeeinheit der Bedieneinheit zeigt das Livebild, welches von der Kamera aufgenommen wird. Der Bediener sollte die Bedieneinheit derart auf die Messstelle richten, dass die Komponente der Messstelle von der Kamera erfasst wird. Über das aktuelle Livebild der Kamera wird das Visualisierungsmodell gelegt. Diese Methode eignet sich für Bedieneinheiten, welche kein transparentes Glas aufweisen, sondern ein herkömmliches Display als Anzeigeeinheit besitzen.

Gemäß einer vorteilhaften Weiterbildung des erfindungsgemäßen Verfahrens ist vorgesehen, dass als Komponente der Messstelle ein Behälter verwendet wird, wobei als Feldgerät ein Füllstandmessgerät, welches nach einem berührungslosen Messverfahren, insbesondere nach dem Ultraschall-Messprinzip, nach dem Pulslaufzeit-Messprinzip, oder nach dem FMCW-Messprinzip arbeitet, verwendet wird, welches zum Bestimmen eines Füllstandes von einem Füllgut in dem Behälter dient. Diese Typen von Feldgeräten wurden bereits im einleitenden Teil der Beschreibung definiert. Anstelle von Füllstandmessgeräten ist jeglicher weitere Typ von Feldgeräten verwendbar. Die folgenden Beispiele beziehen sich jedoch auf Füllstandmessgeräte und typische für Füllstandmessgeräte einzustellende Parameter. Bei Verwendung von anderen Feldgerätetypen sind diese Parameter ggf. nicht verfügbar und andere Parametertypen einzustellen.

In einer bevorzugten Ausgestaltung des erfindungsgemäßen Verfahrens ist vorgesehen, dass aus den Geometriedaten Parameterwerte für die einzustellenden Parameter bezüglich einer Blockdistanz und einer Linearisierungstabelle des Feldgeräts abgeleitet werden. Eine Linearisierungstabelle stellt eine stückweise Approximation zwischen der gemessenen physikalischen Messgröße und dem vom Feldgerät ausgegebenen Messwert dar und wird in nahezu jedem Feldgerätetyp, nicht nur ausschließlich in Füllstandmessgeräten, benötigt. Die Blockdistanz bezeichnet diejenige Distanz, welche ein Messsignal durchläuft, ehe es sich freistrahlend im Behälter bewegen kann. Durch Bestimmen der Blockdistanz wird der Nullpunkt auf der Distanzachse der Messkurve definiert.

Erfindungsgemäß wird als Bedieneinheit eine Datenbrille verwendet. Eine solche Datenbrille besitzt einen Bildschirm, welcher das von der Kamera aufgenommene Bild anzeigt. Für den Bediener erscheint es, als ob das von der Kamera erfasst Bild von den eigenen Augen erfasst wird. Alternativ weist eine Datenbrille einen Projektor auf, welche ein Bild auf eine Scheibe der Brille projiziert. Der Bediener sieht die Umgebung durch die Scheibe der Brille. Gleichzeitig erfasst eine Kamera der Brille die Umgebung in dem Maße, wie die Augen des Bedieners die Umgebung erfassen. Anstatt das gesamte von der Kamera aufgenommene Bild der Umgebung auf die Scheibe zu projizieren, wird lediglich das Visualisierungsmodell auf die Scheibe projiziert. Ein Beispiel für solch eine Datenbrille letzteren Typs, welche für das erfindungsgemäße Verfahren geeignet ist, stellt die "Hololens" von Microsoft dar.

Gemäß einer bevorzugten Ausgestaltung des erfindungsgemäßen Verfahrens ist vorgesehen, dass der Verfahrensschritt des Bestätigens des berechneten Parameterwerts mittels einer Gestensteuerung erfolgt. Die Bedieneinheit visualisiert den berechneten Parameterwert als Symbol und legt diesen über das von der Kamera aufgenommene Bild. Der Bediener zeigt anschließend beispielsweise mit seiner Hand auf das Symbol, bzw. führt seine Hand auf das Symbol. Die Kamera erfasst dabei die Lage der Hand. Durch definierte Bewegungen/Gesten mit der Hand kann der Parameterwert bestätigt werden und/oder das Symbol verschoben werden.

In einer vorteilhaften Ausgestaltung des erfindungsgemäßen Verfahrens ist vorgesehen, dass der bestätigte Parameterwert mittels einer Funkverbindung, insbesondere Bluetooth, an das Feldgerät übermittelt wird. Alternativ zu Bluetooth kann eine beliebige Funkverbindung verwendet werden, beispielsweise Wi-Fi oder Zigbee. Alternativ können die Parameterwerte indirekt an das Feldgerät übermittelt werden. Hierfür werden die Parameterwerte nicht auf direktem Wege an das Feldgerät gesendet, sondern werden von der Bedieneinheit an eine zu dem Feldgerät verschiedene Instanz übermittelt, beispielsweise an die Leitstelle der Anlage, an ein anderes Feldgerät, an eine weitere Bedieneinheit, etc. Von dieser Instanz werden die Parameterwerte dann an das Feldgerät übermittelt.

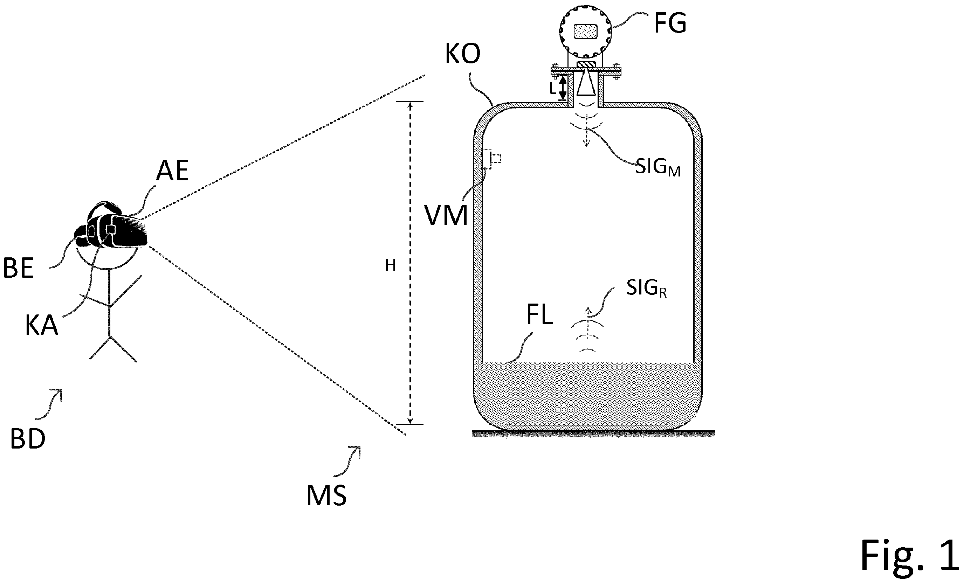

Die Erfindung wird anhand der nachfolgenden Figuren näher erläutert. Es zeigen
Fig. 1: ein Ausführungsbeispiel des erfindungsgemäßen Verfahrens.

In Fig. 1 ist eine Messstelle MS einer Anlage der Prozessautomatisierung gezeigt. Die Messstelle MS besteht aus einem Behälter KO, in welchem ein Füllgut FL gelagert ist. Bei dem Füllgut FL handelt es sich um fluidartiges Medium oder um ein Schüttgut. Zur Überwachung der Füllhöhe h des Füllgutes FL in dem Behälter KO wird ein Feldgerät FG in Form eines berührlosen Füllstandmessgerätes an dem Behälter KO angebracht. Die Füllhöhe h des Füllgutes FL wird dadurch gemessen, dass das Feldgerät ein Messsignal MS emittiert. Das Messsignal MS wird an der Oberfläche des Füllgutes FL reflektiert. Das reflektierte Signal RS wird von dem Feldgerät FG empfangen und bearbeitet. Anhand Kenngrößen des reflektierten Signals RS, beispielsweise anhand der Dauer zwischen dem Emittieren des Messsignals MS und dem Empfang des reflektierten Signals RS kann auf die Füllhöhe h des Füllgutes FL geschlossen werden.

Zur Inbetriebnahme muss das Feldgerät FG parametriert werden. Herkömmlicherweise wird die Parametrierung, also die Zuweisung von Parameterwerten zu spezifischen Parametern, des Feldgeräts FG textbasiert mittels einer Bedieneinheit BE statt. Hierfür ist jedoch mitunter ein tiefgehendes technisches Verständnis seitens des Bedieners BD erforderlich.

Das erfindungsgemäße Verfahren, welches im Folgenden näher erläutert wird, bietet eine Erleichterung der Inbetriebnahme des Feldgeräts FG auch für weniger erfahrene Anwender/Bediener BD.

Nach dem Einbauvorgang des Feldgeräts FG an dem Behälter KO verbindet sich der Bediener BD mit seiner Bedieneinheit BE, hier in Form einer Datenbrille, mit dem Feldgerät FG. Die Verbindung erfolgt drahtlos, beispielweise über Bluetooth (LE) oder Wi-Fi. Anschließend liest die Bedieneinheit BE die Identifikationsdaten des Feldgeräts FG aus und gleicht diese mit einer Datenbank ab. Die Datenbank ist insbesondere über das Internet erreichbar. Zu diesem Zweck besitzt die Bedieneinheit BE ein Mobilfunkmodul, über welches die Bedieneinheit die Datenbank kontaktieren kann. Nach erfolgtem Abgleich übersendet die Datenbank die einzustellenden Parameter des Feldgeräts FG an die Bedieneinheit BE.

In einem folgenden Verfahrensschritt richtet der Bediener BD eine Kamera KA der Bedieneinheit BE auf die Messstelle MS. Anhand einer Referenzgeometrie, in zumindest einer Dimension eine definierte, der Bedieneinheit BE bekannte Länge aufweist und welche beispielsweise am Feldgerät FG angebracht ist, bzw. Teil des Feldgeräts FG ist, definiert die Bedieneinheit BE ein dreidimensionales Polygonnetz. Mittels dieses dreidimensionalen Polygonnetzes ist die Kamera KA, bzw. die Bedieneinheit BE in der Lage, von der Kamera KA erfasste Objekte zu vermessen.

Im Falle des vorliegenden Verfahrens erfasst die Kamera KA die Geometrie des Behälters KO der Messstelle MS und vermisst die Geometrie des Behälters KO. Beispielsweise werden die Abmessungen des Gehäuses des Behälters erfasst. Im vorliegenden Fall erfasst die Kamera KA die Höhe H des Behälters KO sowie die Länge L des Stutzens, mittels welchen das Feldgerät FG mit dem Behälter KO verbunden ist.

Diese erfassten Größen, welche fortan als Geometriedaten H, L bezeichnet werden, vergleicht die Bedieneinheit BE bekannten Geometriedaten, welche sich auf der eingangs erwähnten Datenbank befinden. Im Zuge des Vergleichs werden diejenigen Parameter des Feldgeräts FG bestimmt, für welche anhand der erfassten Geometriedaten H, L Parameterwerte berechnet werden können. Im vorliegenden Fall sind dies Parameter, welche die Linearisierungstabelle des Feldgeräts FG, sowie die Blockdistanz des Feldgeräts FG betreffen.

Das Berechnen der Parameterwerte erfolgt anhand eines oder mehrerer auf der Bedieneinheit BE implementierter Algorithmen. Bereits bekannte Parameterwerte, welche verknüpft mit den bekannten Geometriedaten auf der Datenbank enthalten sind, können Startwerte/Rahmenbedingungen für die Berechnung darstellen. Die berechneten Parameterwerte werden dem Bediener BD anschließend vorgeschlagen.

Im Zuge der Ermittlung der Parameterwerte bezüglich der Linearisierung wird die Höhe H des Behälters KO als Geometriedaten verwendet. Aus der Höhe H kann die Bedieneinheit einen minimalen und einen maximalen Wert der Füllhöhe des Füllguts FL bestimmen.

Im Zuge der Ermittlung der Parameterwerte bezüglich der Blockdistanz wird die Länge L des Stutzens als Geometriedaten verwendet. Aus der Länge L kann die Bedieneinheit schließen, welchen Weg/Distanz das Messsignal SIG_{M} zurücklegt, ehe diese frei in den Behälter KO abstrahlen kann.

Die vorgeschlagenen Parameterwerte werden dem Bediener BD auf der Anzeigeeinheit AE angezeigt. Der Bediener BD kann die berechneten Parameterwerte gegebenenfalls noch abändern und anschließend bestätigen. Die bestätigten Parameterwerte werden nun von der Bedieneinheit BE derart an das Feldgerät FG übermittelt, dass das Feldgerät FG mit den eingegebenen Parameterwerten parametriert wird.

Es kann der Fall eintreten, dass nicht alle relevanten Geometriedaten H, L von der Kamera KA erfasst werden können. In diesem Fall kann die Bedieneinheit BE weitere Geometriedaten von der Datenbank abrufen, welche Teile des Behälters betreffen, welche nicht einsehbar sind, beispielsweise Teile/Komponenten, welche sich im Inneren des Behälters KO befinden. Im vorliegenden Fall handelt es sich um Geometriedaten eines Anschlusses für eine Rohrleitung im Inneren des Behälters KO.

Diese weiteren Geometriedaten werden nun dazu verwendet, um mittels der Bedieneinheit ein dreidimensionales Visualisierungsmodell VM von dem Anschluss für die Rohrleitung zu erstellen. Dieses Visualisierungsmodell den Anschluss für die Rohrleitung in einer 3D-Darstellung dar. Es ist vorgesehen, auf der Anzeigeeinheit AE der Bedieneinheit das aktuelle, von der Kamera KA erfasste Livebild anzuzeigen. Das Visualisierungsmodell VM wird derart in dem Livebild integriert, dass das Visualisierungsmodell an passender Stelle den Behälter auf dem Livebild überlagert.

Hierfür sollte der Bediener BD die Bedieneinheit BE derart auf die Messstelle MS richten, dass der Behälter KO von der Kamera KA erfasst wird. Über das aktuelle Livebild der Kamera wird nun das Visualisierungsmodell VM in der Art gelegt, dass dieses das Bild an derjenigen Stelle überlagert, an welche sich der Aufsatz für die Rohrleitung befindet. Die Wand des Behälters KO wird dabei quasi transparent dargestellt. So sind für den Bediener BD selbst Komponenten im Inneren des Behälters sichtbar. Ändert sich die Position der Kamera KA bezüglich des Behälters so verändert sich das auf der Anzeigeeinheit AE visualisierte Bild dementsprechend. Das Visualisierungsmodell VM verbleibt allerdings auf der zugewiesenen Position des Behälters und "wandert", bzw. dreht sich dementsprechend abhängig von der Verschiebung des Behälters KO auf dem Bild mit.

Es kann darüber hinaus vorgesehen sein, Beschriftungen zu den Geometriedaten hinzuzufügen, welche im Visualisierungsmodell VM angezeigt werden. Diese zeigen beispielsweise die Namen von erkannte Strukturen und/oder die Längeneinheiten der erfassten Geometrien an.

Auch können mittels der weiteren Geometriedaten Parameterwerte für weitere Parameter mittels der Bedieneinheit BE berechnet werden.

Alternativ zu einer Datenbrille kann als Bedieneinheit BE auch ein mobiles Endgerät verwendet werden. Hierfür eignet sich beispielsweise ein Smartphone oder ein Tablet, aber auch ein Laptop mit einer Webcam. Die Auswahl eines Symbols, das Bestätigen eines Parameterwerts und/oder das Verschieben eines Symbols erfolgt mittels der Eingabemittel des mobilen Endgeräts, beispielsweise mittels Berührungen des Touchscreens, mittels Tasteneingaben und/oder mittels Eingaben via Maus.

Das erfindungsgemäße Verfahren eignet sich für alle Arten und Feldgerätetypen und ist nicht etwa auf Füllstandmessgeräte beschränkt. Die in Fig. 1 dargestellten Beispiele beziehen sich jedoch auf Füllstandmessgeräte und präsentieren typische für Füllstandmessgeräte einzustellende Parameter. Bei Verwendung von anderen Feldgerätetypen sind diese Parameter ggf. nicht verfügbar und andere Parametertypen einzustellen.

### Bezugszeichenliste

- AE: Anzeigeeinheit
- BD: Bediener
- BE: Bedieneinheit
- FG: Feldgerät
- FL: Füllgut
- H, L: Geometriedaten
- KA: Kamera
- KO: Komponente einer Messstelle
- MS: Messstelle
- SIG_{M}: Messsignal
- SIG_{R}: reflektiertes Signal
- VM: Visualisierungsmodell

## Patentansprüche

1. Verfahren zur Inbetriebnahme eines an einer Komponente (KO), insbesondere an einem Behälter, einer Messstelle (MS) angebrachten Feldgeräts (FG) der Automatisierungstechnik mittels einer Bedieneinheit (BE), wobei die Bedieneinheit (BE) eine Anzeigeeinheit (AE) und eine Kamera (KA) aufweist, wobei als Bedieneinheit (BE) eine Datenbrille verwendet wird, umfassend:
- Identifizieren des Feldgeräts (FG) mittels der Bedieneinheit (BE);
- Ermitteln von einzustellenden Parametern des Feldgeräts (FG) anhand des Identifizierens des Feldgeräts (FG);
- Erfassen von Geometriedaten (H, L) von zumindest einem Teil der Komponente (KO) mittels der Kamera (KA);
- Analysieren der erfassten Geometrie (H, L) und Ableiten von zumindest einem Parameterwert für zumindest einen der einzustellenden Parameter mittels der Analyse der erfassten Geometrie (H, L);
- Bestätigen des berechneten Parameterwertes; und
- Übermitteln des bestätigten Parameterwertes an das Feldgerät (FG) und Speichern des Parameterwertes in dem Feldgerät (FG).

2. Verfahren nach Anspruch 1, wobei eine Referenzgeometrie mittels der Kamera (KA) erfasst wird, wobei die Referenzgeometrie in zumindest einer Dimension eine definierte Länge aufweist, wobei anhand der Referenzgeometrie ein dreidimensionales Polygonnetz erstellt wird.

3. Verfahren nach Anspruch 2, wobei das dreidimensionale Polygonnetz verwendet wird, um die von der Kamera (KA) erfassten Geometriedaten (H, L) zu vermessen.

4. Verfahren nach zumindest einem der vorherigen Ansprüche, wobei für die Analyse der erfassten Geometrie (H, L) weitere Geometriedaten, welche die erfassten Geometriedaten (H, L) erweitern und insbesondere Teile der Komponente (KO) betreffen, welche nicht von der Kamera (KA) erfassbar sind, hinzugezogen werden.

5. Verfahren nach Anspruch 4, wobei die weiteren Geometriedaten auf dem Feldgerät (FG) gespeichert sind und aus dem Feldgerät (FG) ausgelesen werden.

6. Verfahren nach Anspruch 4, wobei die weiteren Geometriedaten auf einer Datenbank, insbesondere auf einer cloudfähigen Datenbank, gespeichert sind und aus der Datenbank ausgelesen werden.

7. Verfahren nach zumindest einem der vorherigen Ansprüche, wobei im Rahmen der Analyse der erfassten Geometriedaten (H, L), bzw. der weiteren Geometriedaten, ein dreidimensionales Visualisierungsmodell (VM) von zumindest einem Teil der Komponente (KO) erstellt wird.

8. Verfahren nach Anspruch 7, wobei auf der Anzeigeeinheit (AE) das Sichtfeld des Bedieners (BD) dargestellt wird, und wobei das Visualisierungsmodell (VM) die Komponente (KO) auf dem von der Anzeigeeinheit (AE) dargestellten Sichtfeld zumindest teilweise überlagert.

9. Verfahren nach Anspruch 8, wobei die Anzeigeeinheit (BE) als Sichtfeld des Bedieners (BD) ein von der Kamera (KA) erfasstes, ständig aktualisiertes Bild visualisiert, und wobei das Visualisierungsmodell (VM) die Komponente (KO) des auf der Anzeigeeinheit (AE) angezeigten Bilds zumindest teilweise überlagert.

10. Verfahren nach zumindest einem der vorherigen Ansprüche, wobei als Komponente (KO) der Messstelle (MS) ein Behälter verwendet wird, wobei als Feldgerät (FG) ein Füllstandsmessgerät, welches nach einem berührungslosen Messverfahren, insbesondere nach dem Ultraschall-Messprinzip, nach dem Pulslaufzeit-Messprinzip, oder nach dem FMCW-Messprinzip arbeitet, verwendet wird, welches zum Bestimmen eines Füllstandes von einem Füllgut (FL) in dem Behälter (KO) dient.

11. Verfahren nach Anspruch 10, wobei aus den Geometriedaten (H, L) Parameterwerte für die einzustellenden Parameter bezüglich einer Blockdistanz und einer Linearisierungstabelle des Feldgeräts (FG) abgeleitet werden.

12. Verfahren nach zumindest einem der vorherigen Ansprüche, wobei der Verfahrensschritt des Bestätigens des berechneten Parameterwerts mittels einer Gestensteuerung erfolgt.

13. Verfahren nach zumindest einem der vorherigen Ansprüche, wobei der bestätigte Parameterwert mittels einer Funkverbindung, insbesondere Bluetooth, an das Feldgerät (FG) übermittelt wird.

## Claims

1. Procedure to commission a field device (FG), used in automation engineering, mounted on a component (KO), particularly on a vessel, of a measuring point (MS) using an operating unit (BE), wherein the operating unit (BE) has a display unit (AE) and a camera (KA), wherein smart glasses are used as the operating unit (BE), wherein said procedure comprises the following steps:
- Identification of the field device (FG) using the operating unit (BE);
- Determination of parameters of the field device (FG) that are to be configured on the basis of the identification of the field device (FG);
- Recording of geometric data (H, L) of at least a part of the component (KO) using the camera (KA);
- Analysis of the recorded geometry (H, L) and derivation of at least one parameter value for at least one of the parameters to be configured using the analysis of the recorded geometry (H, L);
- Confirmation of the calculated parameter value; and
- Transmission of the confirmed parameter value to the field device (FG) and storage of the parameter value in the field device (FG).

2. Procedure as claimed in Claim 1, wherein a reference geometry is captured using the camera (KA), wherein the reference geometry has a defined length in at least one dimension, wherein a three-dimensional polygon mesh is created using the reference geometry.

3. Procedure as claimed in Claim 2, wherein the three-dimensional polygon mesh is used to measure the geometric data (H, L) captured by the camera (KA).

4. Procedure as claimed in at least one of the previous claims, wherein, other geometric data which increase the captured geometric data (H, L) and which particularly concern parts of the component (KO) that cannot be captured by the camera (KA) are additionally used for the analysis of the captured geometry (H, L).

5. Procedure as claimed in Claim 4, wherein the other geometric data are stored in the field device (FG) and are read out of the field device (FG).

6. Procedure as claimed in Claim 4, wherein the other geometric data are saved in a database, particularly a cloud-compatible database, and are read out of the database.

7. Procedure as claimed in at least one of the previous claims, wherein a three-dimensional visualization model (VM) of at least a part of the component (KO) is created within the framework of the analysis of the captured geometric data (H, L), or of the other geometric data.

8. Procedure as claimed in Claim 7, wherein the view field of the operator (BD) is presented on the display unit (AE), and wherein the visualization model (VM) is at least partially superimposed on the component (KO) in the view field shown by the display unit (AE).

9. Procedure as claimed in Claim 8, wherein the display unit (BE) visualizes an image that is captured by the camera (KA), and constantly updated, as the view field of the operator (BD), and wherein the visualization model (VM) is superimposed at least partially on the component (KO) of the image shown on the display unit (AE).

10. Procedure as claimed in at least one of the previous claims,
wherein a vessel is used as a component (KO) of the measuring point (MS),
wherein a level transmitter which works according to a non-contact measuring procedure, particularly according to the ultrasonic measuring principle, according to the pulse transit time measuring principle or according to the FMCW measuring principle, is used as the field device (FG), wherein said transmitter is used to determine a level of a product (FL) located in the vessel (KO).

11. Procedure as claimed in Claim 10, wherein parameter values for the parameters to be configured with regard to a blocking distance and a linearization table of the field device (FG) are derived from the geometric data (H, L).

12. Procedure as claimed in at least one of the previous claims, wherein the procedural step comprising the confirmation of the calculated parameter value is performed using gesture control.

13. Procedure as claimed in at least one of the previous claims, wherein the confirmed parameter value is transmitted to the field device (FG) using a wireless connection, particularly Bluetooth.

## Revendications

1. Procédé destiné à la mise en service d'un appareil de terrain (FG) de la technique d'automatisation monté sur un composant (KO), notamment sur un réservoir, d'un point de mesure (MS) au moyen d'une unité de commande (BE), l'unité de commande (BE) présentant une unité d'affichage (AE) et une caméra (KA), des lunettes de données étant utilisées comme unité de commande (BE), lequel procédé comprend les étapes suivantes :
- Identification de l'appareil de terrain (FG) au moyen de l'unité de commande (BE) ;
- Détermination de paramètres à régler de l'appareil de terrain (FG) à l'aide de l'identification de l'appareil de terrain (FG) ;
- Acquisition de données géométriques (H, L) d'au moins une partie du composant (KO) au moyen de la caméra (KA) ;
- Analyse de la géométrie (H, L) acquise et déduction d'au moins une valeur de paramètre pour au moins un des paramètres à régler au moyen de l'analyse de la géométrie (H, L) acquise ;
- Confirmation de la valeur de paramètre calculée ; et
- Transmission de la valeur de paramètre confirmée à l'appareil de terrain (FG) et mémorisation de la valeur de paramètre dans l'appareil de terrain (FG).

2. Procédé selon la revendication 1, pour lequel une géométrie de référence est acquise au moyen de la caméra (KA), la géométrie de référence présentant une longueur définie dans au moins une dimension, un réseau de polygones tridimensionnel étant créé à l'aide de la géométrie de référence.

3. Procédé selon la revendication 2, pour lequel le maillage polygonal tridimensionnel est utilisé pour mesurer les données géométriques (H, L) acquises par la caméra (KA).

4. Procédé selon au moins l'une des revendications précédentes, pour lequel, pour l'analyse de la géométrie (H, L) acquise, on fait appel à d'autres données géométriques qui élargissent les données géométriques (H, L) acquises et qui concernent notamment des parties du composant (KO) qui ne peuvent pas être acquises par la caméra (KA).

5. Procédé selon la revendication 4, pour lequel les autres données géométriques sont mémorisées sur l'appareil de terrain (FG) et sont lues à partir de l'appareil de terrain (FG).

6. Procédé selon la revendication 4, pour lequel les autres données géométriques sont stockées dans une base de données, notamment dans une base de données compatible avec le cloud, et sont lues dans la base de données.

7. Procédé selon au moins l'une des revendications précédentes, pour lequel, dans le cadre de l'analyse des données géométriques (H, L) acquises, ou des autres données géométriques, un modèle de visualisation tridimensionnel (VM) d'au moins une partie du composant (KO) est créé.

8. Procédé selon la revendication 7, pour lequel le champ de vision de l'opérateur (BD) est représenté sur l'unité d'affichage (AE), le modèle de visualisation (VM) superposant au moins partiellement le composant (KO) sur le champ de vision représenté par l'unité d'affichage (AE).

9. Procédé selon la revendication 8, pour lequel l'unité d'affichage (BE) visualise, en tant que champ de vision de l'opérateur (BD), une image capturée par la caméra (KA) et actualisée en permanence, le modèle de visualisation (VM) se superposant au moins partiellement à la composante (KO) de l'image affichée sur l'unité d'affichage (AE).

10. Procédé selon au moins l'une des revendications précédentes,
pour lequel on utilise comme composant (KO) du point de mesure (MS) un réservoir,
pour lequel on utilise comme appareil de terrain (FG) un transmetteur de niveau qui fonctionne selon un procédé de mesure sans contact, notamment selon le principe de mesure à ultrasons, selon le principe de mesure du temps de transit des impulsions ou selon le principe de mesure des ondes continues à modulation de fréquence (FMCW), lequel transmetteur sert à déterminer un niveau d'un produit (FL) se trouvant dans le réservoir (KO).

11. Procédé selon la revendication 10, pour lequel, à partir des données géométriques (H, L), on déduit des valeurs de paramètres pour les paramètres à régler concernant une distance de bloc et un tableau de linéarisation de l'appareil de terrain (FG)

12. Procédé selon au moins l'une des revendications précédentes, pour lequel l'étape de procédé consistant à confirmer la valeur de paramètre calculée est effectuée au moyen d'une commande gestuelle.

13. Procédé selon au moins l'une des revendications précédentes, pour lequel la valeur de paramètre confirmée est transmise à l'appareil de terrain (FG) au moyen d'une liaison radio, notamment Bluetooth.
